# EUROPÄISCHE PATENTANMELDUNG

(11) **EP 3 667 106 A1**
(43) Veröffentlichungstag der Anmeldung: **17.06.2020**
(21) Anmeldenummer: 19208813.6
(22) Anmeldetag: 13.11.2019
(51) Int. Cl.: F16B 21/02, F16B 37/04, F16B 19/08

(54) **FUNKTIONSELEMENT, ZUSAMMENBAUTEIL UND VERFAHREN ZUR HERSTELLUNG DES ZUSAMMENBAUTEILS**

(30) Priorität: 11.12.2018 DE 102018131763
(71) Anmelder: Profil Verbindungstechnik GmbH & Co. KG, 61381 Friedrichsdorf (DE)
(72) Erfinder: Donhauser, Georg, 92224 Amberg (DE)
(74) Vertreter: Manitz Finsterwald Patent- und Rechtsanwaltspartnerschaft mbB

(57) **Zusammenfassung**

Ein Funktionselement (10) mit einem Schaftteil (16) mit einer mittleren Längsachse (18) zeichnet sich dadurch aus, dass der Schaftteil (16) einen Kernbereich und mehrere sich in Längsrichtung erstreckende vom Kernbereich abstehende Nasen (22) aufweist. Ferner sind mindestens im Bereich der Winkelerstreckung der Nasen (22) sich zumindest im Wesentlichen in radialer Richtung erstreckende Klemmnuten (24) zur klemmenden Aufnahme eines Bauteils (38) bzw. eines Blechteils vorgesehen. Darüber hinaus ist das Funktionselement (10) mit mindestens einem Formmerkmal (28) versehen, das für den Angriff eines Drehwerkzeugs ausgelegt ist. Hierdurch kann das Funktionselement (10) von einer Seite an einem vorgelochten Blechteil (38) angebracht werden und durch eine Drehbewegung am Blechteil arretiert werden. Es werden auch ein Zusammenbauteil (39) und ein Verfahren zur dessen Herstellung beansprucht.

## Beschreibung

Die vorliegende Erfindung betrifft ein Funktionselement mit einem Schaftteil mit einer mittleren Längsachse, sowie ein Zusammenbauteil bestehend aus dem Funktionselement und einem Bauteil und ein Verfahren zur Herstellung des Zusammenbauteils.

Elemente der oben genannten Art sind in vielen Varianten bekannt, beispielsweise als Mutterelemente oder als Bolzenelemente. Auch sind Funktionselemente bekannt, die andere Funktionen erfüllen, beispielsweise so genannte Kugelbolzen, oder Elemente, die zur Aufnahme von gesteckten Verbindungseinrichtungen wie Teppichösen dienen. Die vorliegende Erfindung kann mit praktisch allen solchen Funktionselementen verwendet werden.

Funktionselemente der oben genannten Arten werden im Regelfall als Nietelemente oder als Einpresselemente realisiert. Charakteristisch für Nietelemente ist, dass sie bei der Anbringung an einem Bauteil, wie zum Beispiel einem Blechteil oder einem Kunststoffbauteil, ggf. mit Faser- oder Gewebeverstärkung verformt werden, beispielsweise durch die Ausbildung eines Nietbördels, während das Bauteil üblicherweise nicht verformt wird. Bei Einpresselementen werden die Funktionselemente üblicherweise nicht verformt, das Bauteil, welches üblicherweise als Blechteil, vorliegt wird dann in eine Hinterschneidung des Funktionselements hineingeformt. Die Verwendung von Einpresselementen mit Bauteilen aus Kunststoff, ggf. mit Faser- oder Gewebeverstärkung, ist allerdings schwierig, da Bauteile aus Kunststoff nur beschränkt, wenn überhaupt, fließfähig sind. Das Bauteil bzw.

Blechteil kann vorgelocht werden oder mit so genannten selbststanzenden Funktionselementen verwendet werden, die ihr eigenes Loch im Blechteil schneiden.

Nur die wenigsten Funktionselemente lassen sich einseitig anbringen, d.h. von einer Seite des Bauteils aus mit dem Bauteil verbinden, ohne die Notwendigkeit das Bauteil an der Rückseite auf einer Matrize abzustützen. Solche einseitig einsetzbaren Mutterelemente oder Bolzenelemente sind meistens als Nietmutter oder Nietbolzen bekannt und stellen eine besondere Form von Blindnieten dar.

Aufgabe der vorliegenden Erfindung ist es, ein Funktionselement vorzusehen, das einseitig an einem Bauteil angebracht werden kann, aber nicht muss, und welches als Mutterelement oder als Bolzenelement realisiert werden kann oder welches eine andere Funktion erfüllen kann. Ferner soll ein besonderes Zusammenbauteil und ein Verfahren zur Herstellung des Zusammenbauteils vorgesehen werden. Ferner soll das Element, das als eine Art Einpresselement betrachtet werden kann, sowohl mit Bauteilen aus Blech oder solchen aus Kunststoff, ggf. mit Faser- oder Gewebeverstärkung, verwendet werden können und zwar ohne die Notwendigkeit das Bauteil in nennenswertem Ausmaß verformen zu müssen. Darüber hinaus soll das Element auch mit Bauteilen verwendet werd3n können, die als Druckgussteile oder Strangussteile vorliegen.

Zur Lösung dieser Aufgaben wird erfindungsgemäß ein Funktionselement der oben genannten Art vorgesehen, das sich dadurch auszeichnet, dass der Schaftteil mehrere sich in Längsrichtung erstreckende und radial abstehende Nasen aufweist, dass mindestens im Bereich der Winkelerstreckung der Nasen sich zumindest im Wesentlichen in radialer Richtung erstreckende Klemmnuten zur klemmenden Aufnahme eines Bauteils bzw. eines Blechteils vorgesehen sind, und dass das Funktionselement mit mindestens einem Formmerkmal versehen ist, das für den Angriff eines Drehwerkzeugs ausgelegt ist.

Das erfindungsgemäße Zusammenbauteil, bestehend aus dem erfindungsgemäßen Funktionselement und einem Blechteil, zeichnet sich dadurch aus, dass das Blechteil ein Formloch mit einer Querschnittsform aufweist, das zumindest im Wesentlichen der Querschnittsform und -größe des Schaftteils entspricht, wobei das Funktionselement gegenüber dem Blechteil so verdreht ist, dass Bereiche des Blechteils, die sich bei der Durchführung des Schaftteils durch das Formloch hindurch zwischen den Nasen des Schaftteils befanden, sich nunmehr in den Klemmnuten des Schaftteils befinden und dort verkeilt sind.

Das erfindungsgemäße Verfahren zur Herstellung eines Zusammenbauteils umfasst vorzugsweise die folgenden Schritte:
dass ein Formloch im Blechteil mit einer Querschnittsform ausgebildet wird, die zumindest im Wesentlichen der Querschnittsform und -größe des Schaftteils entspricht, dass der Stanzabschnitt durch das Formloch hindurch geführt wird, bis der Randbereich des Formloches sich in etwa in der axialen Höhe der Klemmnuten befindet, und dass das Funktionselement um seine mittlere Längsachse gedreht wird, bis die Randbereiche des Formloches, die sich zwischen den Nasen befinden, in die Klemmnuten eingeklemmt sind.

Das erfindungsgemäße Funktionselement lässt sich also zur Bildung des Zusammenbauteils von einer Seite an ein vorgelochtes Blechteil oder ein anderes vorgelochtes Bauteil, wie z.B. an einer faserverstärkten Platte, anbringen, ohne dass das Blechteil bzw. Bauteil von der Rückseite zugänglich sein muss.

Das erfindungsgemäße Funktionselement kann aber auch selbststanzend verarbeitet werden, wenn das Blechteil bzw. das Bauteil auf einer geeigneten Matrize abgestützt wird. In diesem Falle wird das freie Stirnende des Schaftteils zur Herstellung des Formlochs als Stanzwerkzeug verwendet. Bei einer solchen Verfahrensweise muss das Funktionselement nur um einen geeigneten Winkel um die Längsachse gedreht werden, um das Funktionselement im Blechteil bzw. im Bauteil zu arretieren, was ohne Weiteres in einem Setzkopf passieren kann, der zum Transport der Funktionselemente und zum Durchstanzen des Blechteils bzw. Bauteils verwendet wird. Bei einem Funktionselement mit zwei Nasen beträgt der geeignete Winkel vorzugsweise 90 Grad oder etwas weniger, bei drei Nasen 60 Grad oder etwas weniger und bei vier Nasen 45 Grad oder etwas weniger. Es muss also lediglich eine beschränkte Drehung erfolgen, um das Funktionselement klemmend mit dem Bauteil zu verbinden, was auch ohne Verformung des Bauteils erfolgt, wenn man von einem beschränkten Quetschen des Bauteils absieht.

Es bestehen mehrere Möglichkeiten das Funktionselement im Blechteil bzw. im Bauteil zu arretieren. Eine Möglichkeit besteht darin, dass die radiale Tiefe jeder Nut in Umfangsrichtung gehend abnimmt, d.h. jede Klemmnut eine radiale Keilform aufweist. D.h. ein radial ansteigender Durchmesser liegt in der Nut vor.

Eine weitere Möglichkeit besteht darin, dass jede Klemmnut in Umfangsrichtung keilförmig verläuft, d.h. jede Klemmnut ist in Umfangsrichtung sich in axialer Tiefe verjüngend ausgebildet. Man könnte sagen, dass die untere Begrenzungswand jeder Klemmnut wendelförmig ansteigt. Als weitere Alternative oder zusätzlich dazu könnte die obere Begrenzung jeder Klemmnut wendelförmig absteigen.

Eine weitere Möglichkeit der Arretierung wäre es, die Klemmnuten als Bereiche eines mehrgängigen Gewindes auszubilden, wobei die Randbereiche des Formloches durch die Drehbewegung des Funktionselements winkelmäßig entsprechend der Gewindesteigung angestellt und hierdurch durch Reibungskräfte geklemmt werden. Bei einer solchen Ausführungsform könnte man sagen, dass jeder Klemmnut parallel zueinander verlaufenden obere und untere Begrenzungsflächen aufweist und insgesamt wendelförmig ansteigt. Wenn die Gewindegänge vor einem Flansch oder einem anderweitigen Anschlag des Funktionselements enden, so kann der Flansch bzw. der Anschlag ein weiteres Verdrehen des Funktionselements gegenüber dem Bauteil verhindern. Bei der Verwendung von zwei Nasen käme ein zweigängiges Gewinde zur Anwendung. Im Allgemeinen entspricht bei einem mehrgängigen Gewinde die Anzahl der Gewindegänge der Anzahl von Nasen.

Die Nasen sind vorzugsweise gerundet, da dies scharfe Ecken im Bauteil vermeidet, die zu Ermüdungsrissen führen könnten. Dies ist allerdings nicht zwingend erforderlich, die Nasen könnten beispielsweise auch die Form von rechteckigen Lappen haben oder spitz ausgebildet sein.

Bei einem besonders bevorzugten Funktionselement weist der Schaftteil im Querschnitt einen Kernbereich auf, von dem vorzugsweise mindestens zwei sich in Längsrichtung erstreckende Nasen radial abstehen, wobei die zwei vorhandenen Nasen an zwei sich einander gegenüberliegenden Seiten des Kernbereichs vorgesehen sind oder der Schaftteil sich im Querschnitt als Ellipse darstellt, wobei die Nasen den Hauptdurchmesser der Ellipse bilden.

Eine solche Formgebung des Schaftteils führt dazu, dass das Funktionselement zur Arretierung desselben um etwas weniger als 90 Grad verdreht werden muss.

In einer anderen Ausführungsform weist der Schaftteil des Funktionselements im Querschnitt in etwa die Form eines dreiblättrigen Kleeblatts mit drei vom Kernbereich abstehenden Blättern bzw. Nasen auf und weist zwischen je zwei benachbarten Nasen jeweils eine gerundete Vertiefung auf. Um bei diesem Beispiel eine Arretierung des Funktionselements im Blechteil zu bewirken, muss das Funktionselement um etwas weniger als 60 Grad gedreht werden.

Gemäß einem weiteren Ausführungsbeispiel weist der Schaftteil des Funktionselements im Querschnitt die Form eines vierblättrigen Kleeblatts mit vier vom Kernbereich abstehenden Nasen auf und weist zwischen je zwei benachbarten Nasen jeweils eine gerundete Vertiefung auf. Um bei diesem Beispiel eine Arretierung des Funktionselements im Blechteil zu bewirken, muss das Funktionselement um etwas weniger als 45 Grad gedreht werden.

Mehr als vier Nasen ist grundsätzlich möglich, führt jedoch dazu, dass der Grad der Verdrehung des Funktionselements immer kleiner wird, wodurch eine zuverlässige Klemmung bzw. Arretierung des Funktionselements im Blechteil immer schwieriger wird. Außerdem führt es dazu, dass beim Lösen des mit dem Funktionselement kooperierenden Funktionselements, d.h. Bolzen oder Mutter, die Gefahr des unerwünschten Lösens des Funktionselements im Blechteil stets größer wird.

Besonders günstig ist es, wenn benachbart zu den Nuten ein Flansch vorgesehen ist, dessen radiale Ausdehnung in mindestens einer radialen Richtung größer ist als der Schaftteil in dieser Richtung. Spätestens dann, wenn die Unterseite des Flansches, d.h. die Seite des Flansches benachbart zum Schaftteil, mit dem Blechteil in Kontakt tritt, weiß man, dass das Funktionselement gegenüber dem Blechteil verdreht werden kann. Ferner wird die Gefahr ausgeschlossen, dass das Element ungewollt durch das Formloch hindurchfallen kann.

Der Flansch kann in Draufsicht kreisrund sein, er kann aber auch eine andere Formgebung aufweisen, bspw. eine Querschnittsform entsprechend der des Schaftteils. Dies macht es leichter, bei einem vorgelochten Blechteil die Winkelposition des Funktionselements um seine mittlere Drehachse herum an die Orientierung des Formloches anzupassen. Bei einer selbststanzenden Auslegung des Funktionselements muss die genannte Winkelposition des Funktionselements an die Orientierung der Lochmatrize angepasst werden. Besonders günstig ist es, wenn der Flansch eine Querschnittsform entsprechend der des Schaftteils aufweist, welche aber gegenüber dem Schaftteil verdreht ist. Hierdurch kann der Flansch materialsparend ausgelegt werden und dennoch die Funktion als Flansch erfüllen. Der Flansch kann sogar mit einer radialen Ausdehnung kleiner als der des Schaftteils hergestellt werden. Ferner werden Funktionselemente üblicherweise aus Metall mittels eines Kaltschlagverfahrens hergestellt, und die hierdurch entstehenden Kosten können durch Verkleinerung des Ausmaßes des Flansches ebenfalls herabgesetzt werden. Es ist allerdings nicht zwingend erforderlich die erfindungsgemäßen Funktionselemente durch ein Kaltschlagverfahren herzustellen. Sie könnten, je nach Aufgabe und Material des Bauteils, als Gießteile insbesondere Druckgussteile in Metall oder als Spritzgussteile in Kunststoff ggf. mit Metallkern oder Faserverstärkung hergestellt werden. Zum Beispiel könnten die Funktionselemente mit Holzbauteilen wie Spannplattenmaterial bei der Möbelherstellung angewandt werden.

Der Flansch könnte auch als Senkkopf ausgebildet werden, d.h. mit einem Konuswinkel versehen werden, und das Bauteil im Bereich des Vorlochs könnte zur Aufnahme des Senkkopfs ausgebildet werden, so dass im eingebauten Zustand die Oberseite des Senkkopfes zumindest in etwa flächenbündig mit der Oberseite des Bauteils liegt oder geringfügig gegenüber diese Oberseite zurückversetzt ist, wodurch sich insgesamt eine planare Anschraubfläche ergibt. Wenn in dieser Anmeldung von oben oder von unten oder von einer Oberseite und einer Unterseite oder Rückseite oder von anderen geometrischen Positionen gesprochen wird, so beziehen sich diese geometrischen Bezeichnungen auf die beigefügten Zeichnungen und sie stellen keine geometrischen Beschränkungen des Anmeldungsgegenstandes dar. Ein Flansch ist allerdings nicht zwingend erforderlich. Das Funktionselement könnte stattdessen, abgesehen von den Nuten, den gleichen Querschnitt über seine gesamte Länge aufweisen. Normalerweise wird der Schaftteil des Funktionselements über seine gesamte Länge mit der gleichen Querschnittsform und -größe versehen.

Wenn das Funktionselement eine mittlere Gewindebohrung aufweist, wird es als Mutterelement realisiert. Die Anschraubrichtung, d.h. die Richtung aus der ein Bolzenelement in das Mutterelement eingeschraubt wird, um ein weiteres Bauteil an dem Zusammenbauteil anzubringen, kann wahlweise von oben oder von unten kommend gewählt werden, wobei im Falle der einseitigen Anbringung des Funktionselements am Blechteil, die Anbringung des weiteren Bauteils im Regelfall von der gleichen Seite erfolgen müsste, da man sonst nicht mit der einseitigen Anbringung arbeiten müsste und ganz andere Funktionselemente in Frage kämen.

Wenn das Funktionselement auf einer seiner Stirnseiten, vorzugsweise auf der den Nuten benachbarten Stirnseite, einen vorstehenden Gewindezylinder aufweist, stellt er ein Bolzenelement dar.

Für die Drehbewegung des Funktionselements um seine mittlere Drehachse zur Arretierung des Funktionselements im Blechteil, kann das Formmerkmal für den Angriff eines Drehwerkzeugs grundsätzlich als Innen- oder Außenantrieb realisiert werden. Zum Beispiel kann das Formmerkmal aus der Gruppe, bestehend aus einem Innensechskant, einem Innenmehrkant, einer Torx-Aufnahme, einem Außensechskant, einem Außenmehrkant, mehreren stirnseitigen achsparallelen Bohrungen zur Aufnahme eines Zapfenschlüssels, sich in axialer Richtung erstreckenden Umfangsnuten für den Angriff eines C-Schlüssels, und einer äußeren von einer Kreisform abweichenden Form zur Aufnahme eines Schlüssels mit einer komplementären Formgebung, ausgewählt werden, wobei im Falle eines Innensechskants oder eines Innenmehrkants oder einer Torx-Aufnahme eine mittlere Gewindebohrung in der entsprechenden Aufnahme vorgesehen sein kann, die vorzugsweise zur Aufnahme eines genormten Bolzens bemessen ist. Auch ein vorhandenes Gewinde kann für das Eindrehen des Funktionselements im Bauteil herangezogen werden. Beispielsweise könnte bei einem Mutterelement ein Eindrehwerkzeug mit einem einen Gewindezylinder aufweisenden Zapfen in die Gewindebohrung des Mutterelements bis zu einer dem Zapfen begrenzer Schulter eingeschraubt und dann weitergedreht werden um das mutterelement im Bauteil zu klemmen. Auch käme ein Bolzen mit Kontermutter zu diesem Zweck in Frage. Danach wird der Zapfen oder der Bolzen entfernt. Bei einem Bolzenelement käme im umgekehrten Sinn eine Mutter oder eine ein Innengewinde aufweisende Hulse oder Stempel eines Setzkopfes in Frage, die nach der Anbringung des Bolzenelements am Bauteil anschließend entfernt wird. Man hat daher eine Vielzahl von Möglichkeiten die erforderliche Drehbewegung des Funktionselements zu realisieren.

Die Erfindung wird nachfolgend anhand von Ausführungsbeispielen unter Bezugnahme auf die Zeichnungen näher erläutert, in welchen zeigen:

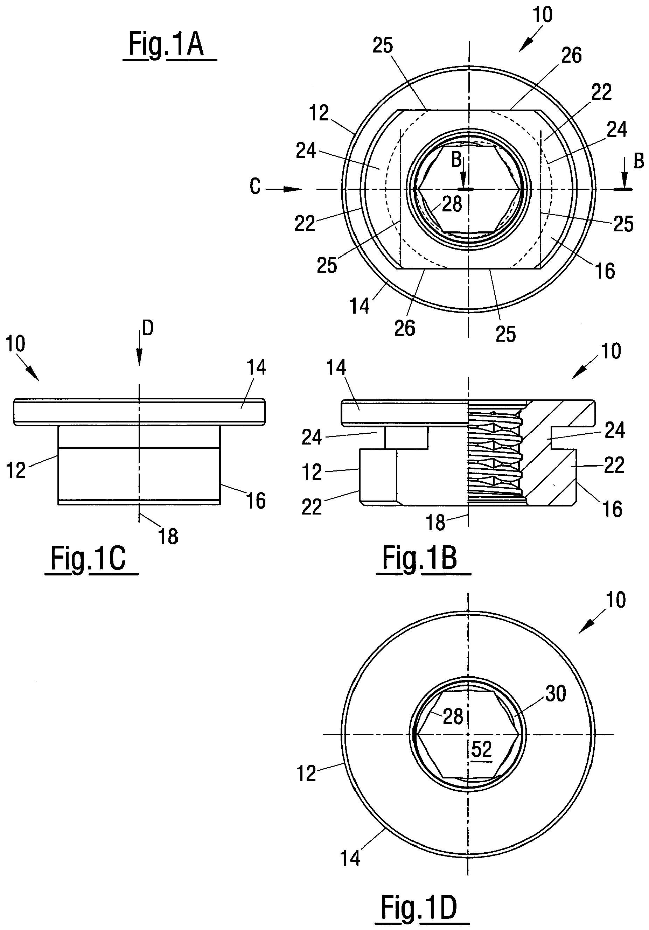

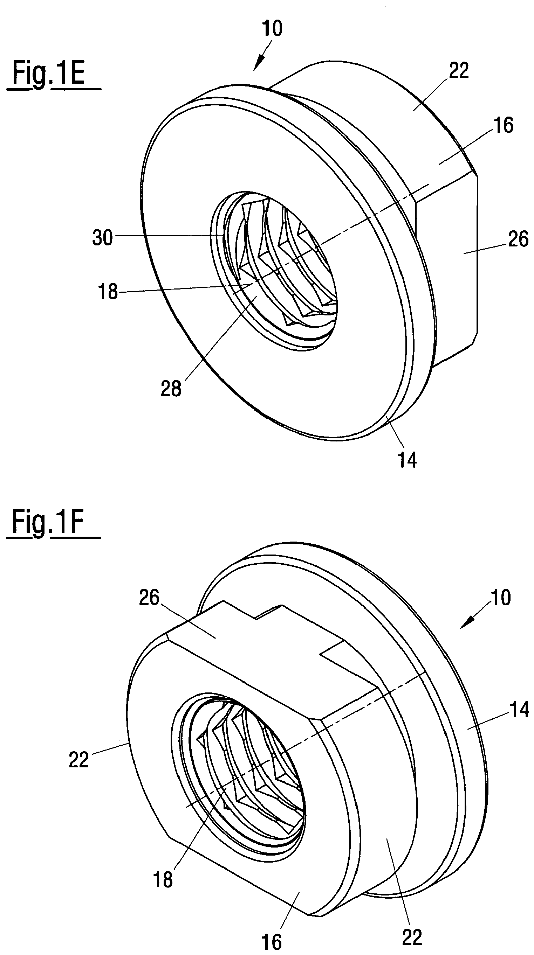

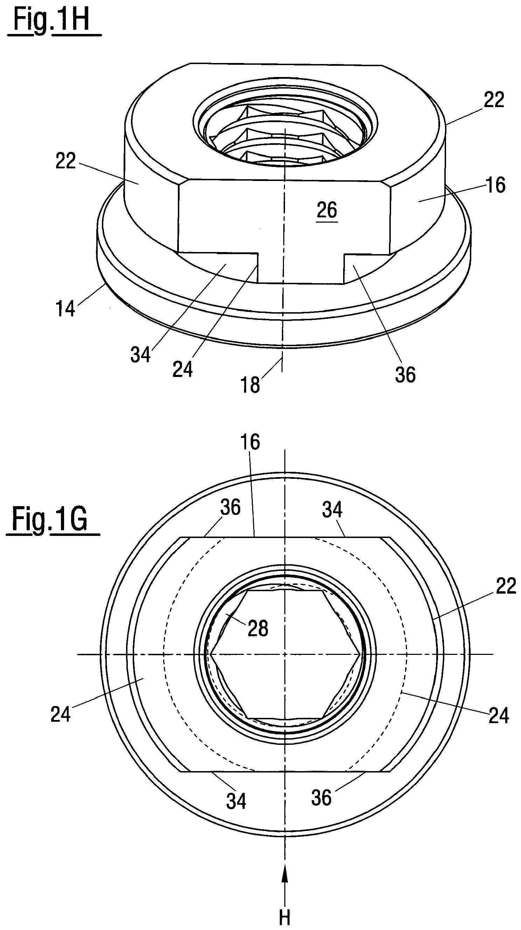

- Fig. 1A - 1H: Zeichnungen eines ersten erfindungsgemäßen Mutterelements und zwar in Fig. 1A in einer Draufsicht von unten, in Fig. 1B in einer teilweise in Längsrichtung bzw. in der Schnittebene B-B der Fig. 1A geschnittenen Ansicht, in Fig. 1C in einer Seitenansicht in Pfeilrichtung C der Fig. 1A, in Fig. 1D in einer Draufsicht von oben bzw. in Pfeilrichtung D in Fig. 1C, in Fig. 1E in einer vergrößerten perspektivischen Darstellung schräg von oben, in Fig. 1F in einer vergrößerten perspektivischen Darstellung schräg von unten, in Fig. 1G in einer vergrößerten Darstellung der Fig. 1A, aus der die Keilform der Nuten ersichtlich ist und in Fig. 1H eine perspektivische Darstellung des Mutterelements der Fig. 1G schräg von unten, in etwa in der Pfeilrichtung H der Fig. 1G, um die Keilform besser darzustellen,
- Fig. 2A: das Entstehen eines Zusammenbauteils, bestehend aus dem Mutterelement der Fig. 1A bis 1H und einem schematisch dargestellten Blechteil von unten gesehen, und zwar vor dem Einsetzen des Mutterelements in das vorgelochte Blechteil,
- Fig. 2B: eine Darstellung des Mutterelements der Fig. 1A bis 1H geschnitten, entsprechend der Schnittebene B-B der Fig. 2A, oberhalb des entsprechend geschnittenen Blechteils vor dem Einsetzen in das vorgelochte Blechteil,
- Fig. 2C: eine Darstellung ähnlich der Fig. 2B, jedoch nach dem Einsetzen des Funktionselements von der Oberseite in das vorgelochte Blechteil und nach der Verdrehung des Funktionselements in dem vorgelochten Blechteil durch etwa 90 Grad in Pfeilrichtung der Fig. 2A, hier mit radialer Klemmung des Blechteils,

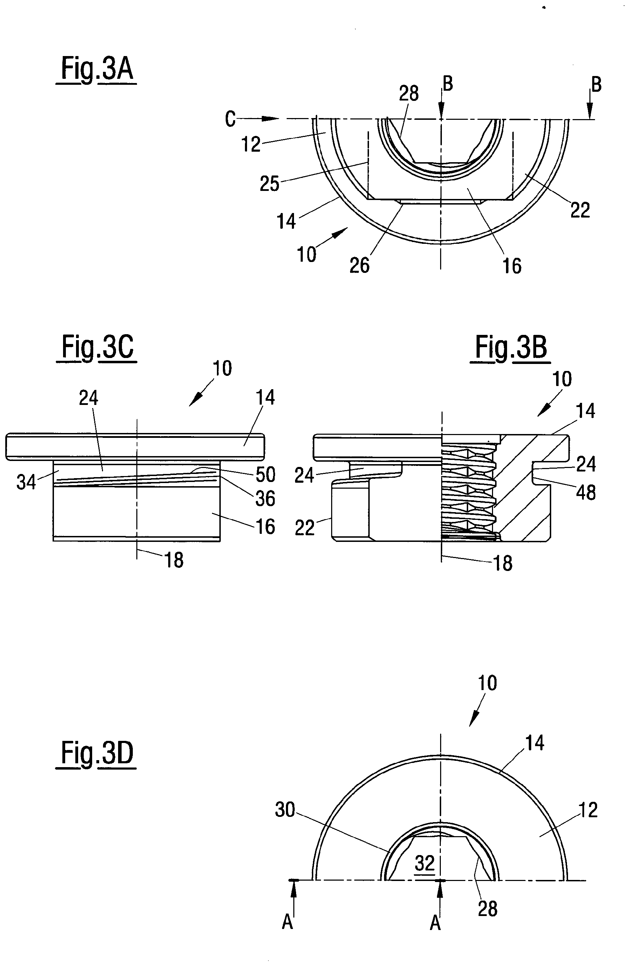

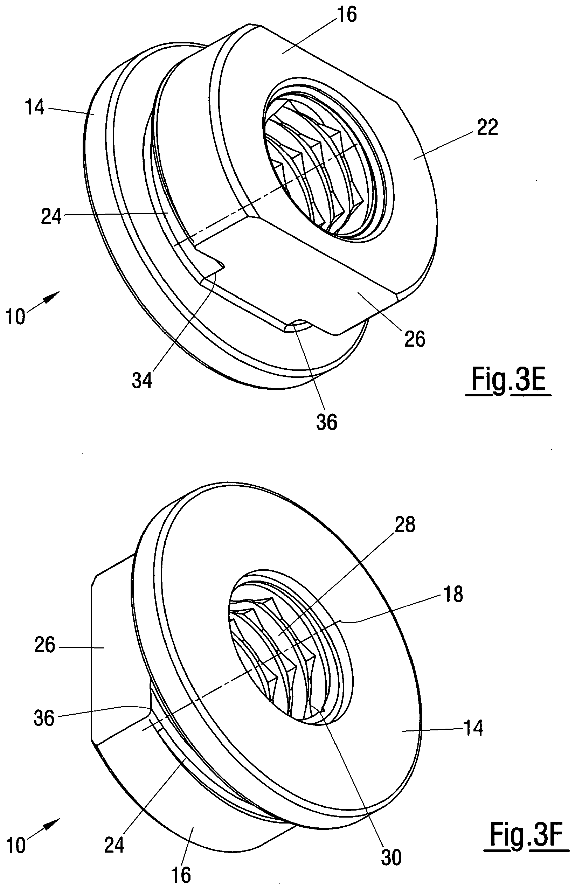

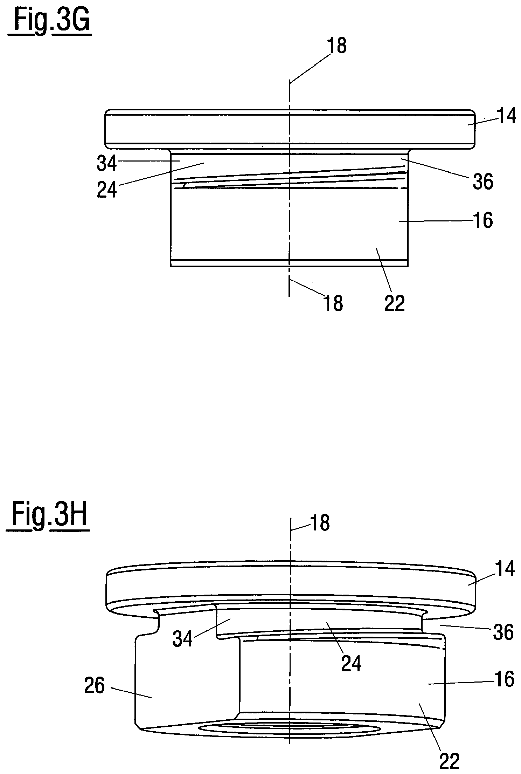

- Fig. 3A - 3H: Zeichnungen eines zweiten erfindungsgemäßen Mutterelements und zwar in Fig. 3A in einer Halbdraufsicht von unten, in Fig. 3B in einer teilweise in Längsrichtung bzw. in der Schnittebene B-B der Fig. 3A geschnittenen Ansicht, in Fig. 3C in einer Seitenansicht in Pfeilrichtung C der Fig. 3A, in Fig. 3D in einer Halbdraufsicht von oben, in Fig. 3E in einer vergrößerten perspektivischen Darstellung schräg von unten, in Fig. 3F in einer vergrößerten perspektivischen Darstellung schräg von oben, in Fig. 3G in einer vergrößerten Darstellung der Fig. 3C, aus der die Keilform der einen Nute ersichtlich ist und in Fig. 3H eine perspektivische Darstellung des Mutterelements der Fig. 3G, jedoch gedreht und gekippt, um die Keilform der zwei Nuten besser darzustellen,
- Fig. 4A: eine Darstellung des Mutterelements der Fig. 3A bis 3H geschnitten, entsprechend der Schnittebene A-A der Fig. 3D, oberhalb eines entsprechend geschnittenen Blechteils vor dem Einsetzen in das vorgelochte Blechteil,
- Fig. 4B: ein Zusammenbauteil bestehend aus dem Mutterelement der Fig. 3A bis 3H und dem Blechteil der Fig. 4A nach dem Einsetzen des Mutterelements in das Blechteil und nach der Drehung des Mutterelements um 90 Grad,

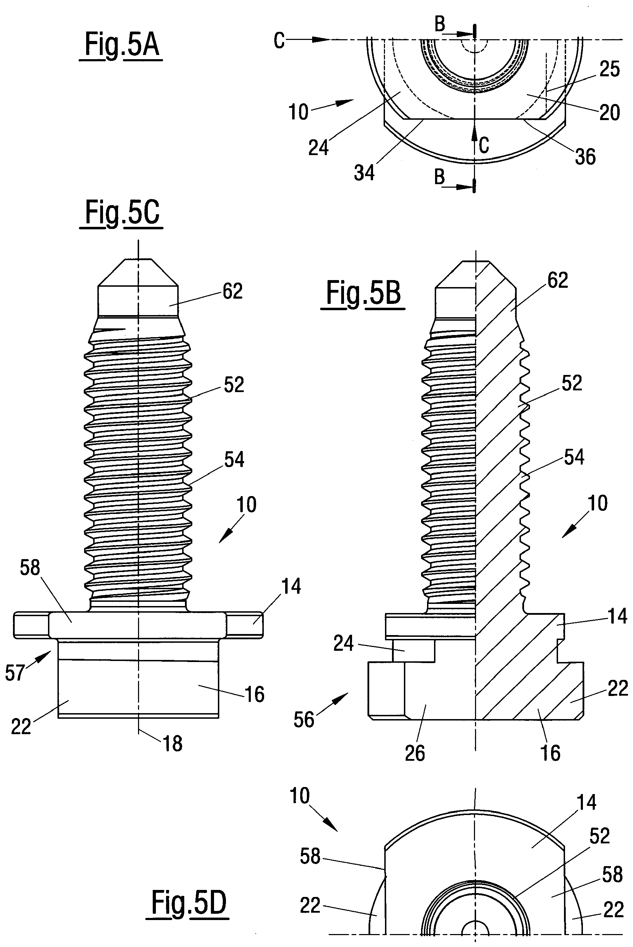

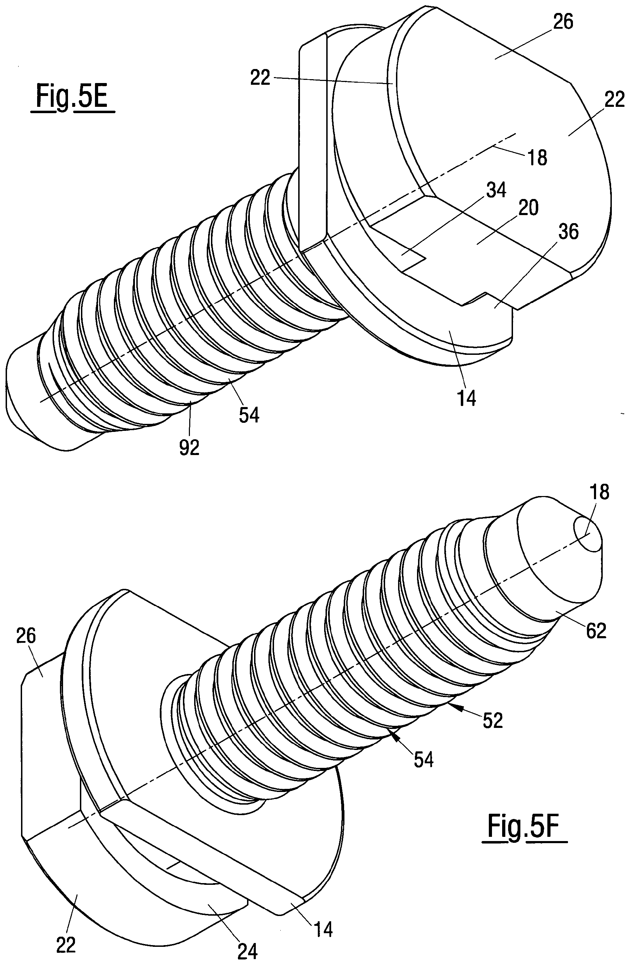

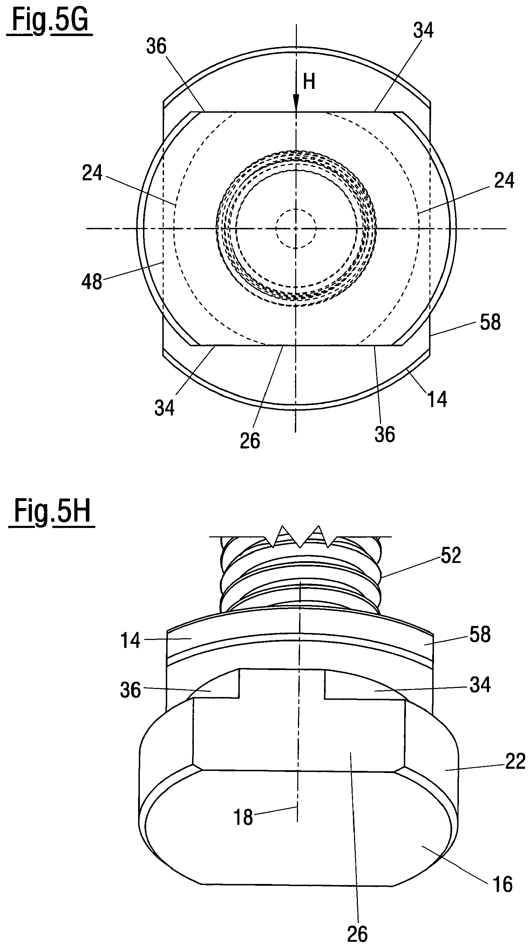

- Fig. 5A - 5H: Zeichnungen eines ersten erfindungsgemäßen Bolzenelements und zwar in Fig. 5A in einer Halbdraufsicht von unten, in Fig. 5B in einer teilweise in Längsrichtung bzw. in der Schnittebene B-B der Fig. 5A geschnittenen Ansicht, in Fig. 5C in einer Seitenansicht in Pfeilrichtung C der Fig. 5A, in Fig. 5D in einer Halbdraufsicht von oben, in Fig. 5E in einer vergrößerten perspektivischen Darstellung schräg von oben, in Fig. 5F in einer vergrößerten perspektivischen Darstellung schräg von unten, in Fig. 5G in einer vergrößerten Darstellung der Fig. 5A, aus der die Keilform der Nuten ersichtlich ist und in Fig. 5H in einer perspektivischen Darstellung des Bolzenelements der Fig. 5G von unten, in etwa in der Pfeilrichtung H der Fig. 5G, um die Keilform besser darzustellen,
- Fig. 6A: das Entstehen eines Zusammenbauteils bestehend aus dem Bolzenelement der Fig. 5A bis 5H und einem schematisch dargestellten Blechteil von unten gesehen und zwar vor dem Einsetzen des Mutterelements in das vorgelochte Blechteil,
- Fig. 6B: eine Darstellung des Bolzenelements der Fig. 5A bis 5H geschnitten, entsprechend der Schnittebene B-B der Fig. 6A, oberhalb des entsprechend geschnittenen Blechteils vor dem Einsetzen in das vorgelochte Blechteil,
- Fig. 6C: eine Darstellung ähnlich der Fig. 6B, jedoch nach dem Einsetzen des Funktionselements von der Oberseite in das vorgelochte Blechteil und nach der Verdrehung des Funktionselements in der gezeigten Pfeilrichtung in dem vorgelochten Blechteil durch etwa 90 Grad, hier mit radialer Klemmung des Blechteils,

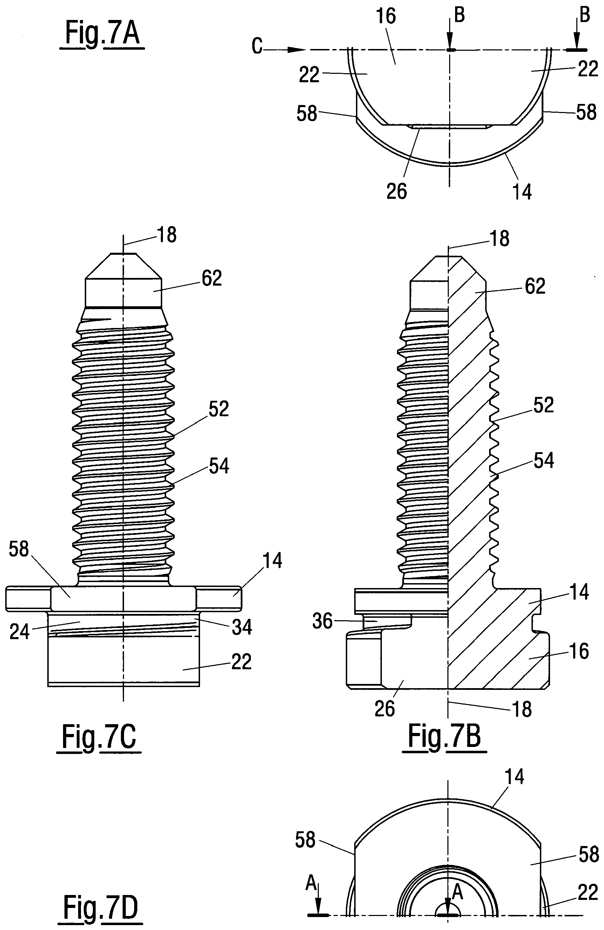

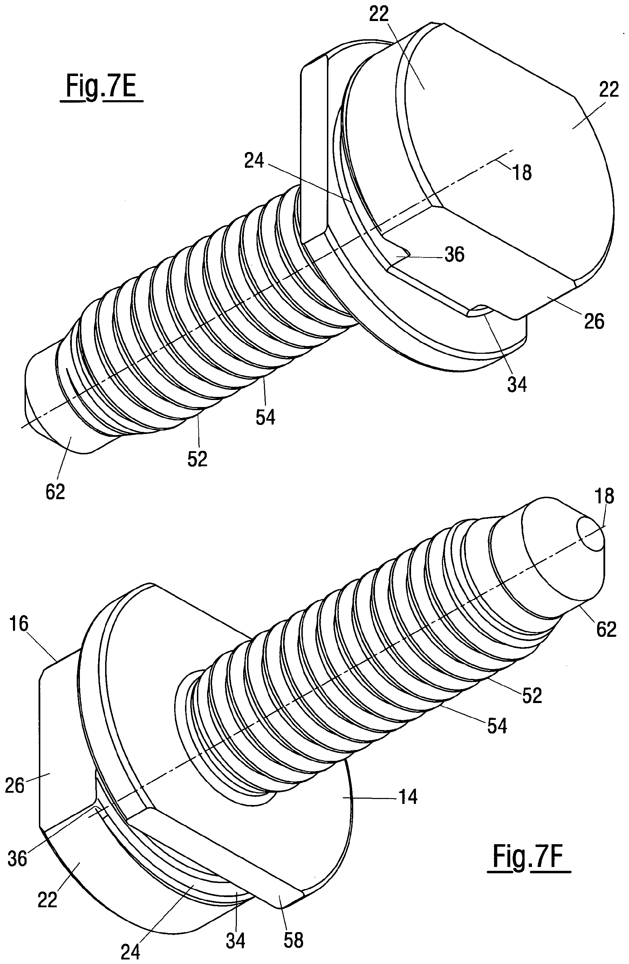

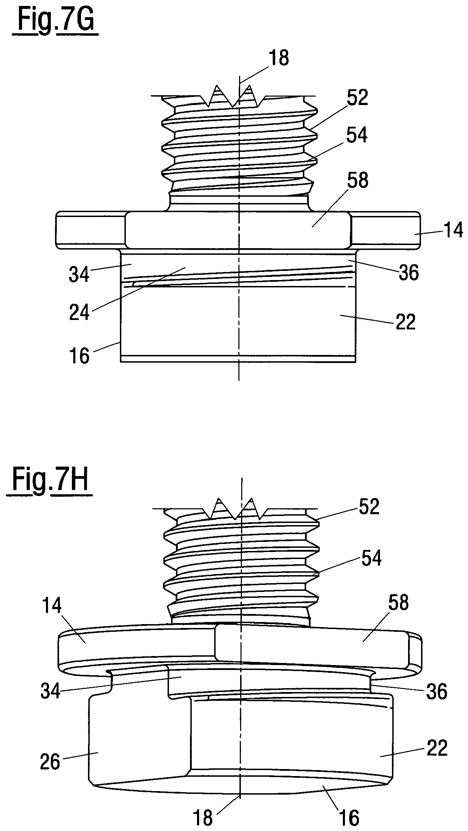

- Fig. 7A - 7H: Zeichnungen eines zweiten erfindungsgemäßen Bolzenelements und zwar in Fig. 7A in einer Halbdraufsicht von unten, in Fig. 7B in einer teilweise in Längsrichtung bzw. in der Schnittebene B-B der Fig. 7A geschnittenen Ansicht, in Fig. 7C in einer Seitenansicht in Pfeilrichtung C der Fig. 7A, in Fig. 7D in einer Halbdraufsicht von oben, in Fig. 7E in einer vergrößerten perspektivischen Darstellung schräg von oben, in Fig. 7F in einer vergrößerten perspektivischen Darstellung schräg von unten, in Fig. 7G in einer vergrößerten Darstellung der Fig. 7C, aus der die Keilform der einen Nute ersichtlich ist und in Fig. 7H eine perspektivische Darstellung des Bolzenelements der Fig. 7G, jedoch gedreht und gekippt, um die Keilform der zwei Nuten besser darzustellen,
- Fig. 8A: eine Darstellung des Bolzenelements der Fig. 7A bis 7H geschnitten, entsprechend der Schnittebene A-A der Fig. 7D, oberhalb eines entsprechend geschnittenen Blechteils vor dem Einsetzen in das vorgelochte Blechteil,
- Fig. 8B: ein Zusammenbauteil, bestehend aus dem Bolzenelement der Fig. 7A bis 7H und dem schematisch dargestellten Blechteil der Fig. 8A, nach dem Einsetzen des Mutterelements in das Blechteil und nach der Drehung des Mutterelements um 90 Grad,
- Fig. 9A: eine Stirnansicht eines Schaftteils mit drei Nasen,
- Fig. 9B: einen Querschnitt durch die Ausführung gemäß Fig. 9A an der Schnittebene B-B der Fig. 9A,
- Fig. 9C: eine Stirnansicht eines Schaftteils mit vier Nasen und
- Fig. 9D: einen Querschnitt durch die Ausführung gemäß Fig. 9C an der Schnittebene D-D der Fig. 9C.

In der nachfolgenden Beschreibung wird bei allen Ausführungsformen unterstellt, dass das Funktionselement, egal ob Mutterelement oder Bolzenelement oder ein eine sonstige Funktion erfüllendes Element von oben kommend in ein vorgelochtes Bauteil, insbesondere in ein vorgelochtes Blechteil, eingesetzt wird. Alle in dieser Patentbeschreibung verwendeten geometrischen Bezeichnungen wie oben, unten, oberhalb, unterhalb oder seitlich beziehen sich auf diese Orientierung, die in den beiliegenden Zeichnungen berücksichtigt wird. Diese Orientierung soll aber nicht als einschränkend betrachtet werden. Das heißt, dass die Funktionselemente in jeder möglichen Raumorientierung verwendet werden können.

Ferner soll auch zum Ausdruck gebracht werden, dass das Bauteil normalerweise deshalb vorgelocht ist, weil das Funktionselement hauptsächlich für die Montage in Bauteilen gedacht ist, die nur von einer Seite leicht zugänglich sind, wie zum Beispiel die Wände von Hohlräumen oder Rohren oder Gehäusen. Wenn das Bauteil von beiden Seiten zugänglich ist, wie zum Beispiel ein Blechteil, ist es nicht erforderlich das Bauteil vorzulochen, stattdessen kann das Funktionselement selbststanzend ausgeführt werden. Das heißt, das Funktionselement kann mit einer Matrize mit einer geeigneten Formgebung, auf der das Bauteil abgestützt wird, dazu verwendet werden, sein eigenes Loch in das Bauteil zu stanzen. Dies geht sowohl bei Blechteilen als auch bei Bauteilen aus Kunststoff, auch solchen Bauteilen mit Faser- oder Gewebeverstärkung.

Bezug nehmend auf die Fig. 1A bis 1H wird dort ein Funktionselement 10 gezeigt, hier in der Form eines Mutterelements mit einem Körper 12, der aus einem Flansch 14 und einem Schaftteil 16 mit einer mittleren Längsachse 18 besteht. Der Schaftteil 16 weist einen Kernbereich 20 und zwei sich in Richtung der Längsachse 18 erstreckende und vom Kernbereich 20 radial abstehende Nasen 22 auf. In diesem Beispiel und in den weiteren Beispielen sind stets zwei solche Nasen 22 vorgesehen, es können aber auch drei oder vier oder sogar noch mehrere Nasen 22 sein, wobei mehr als vier Nasen in der Praxis eher unerwünscht wären, da die Verriegelung des Funktionselements in einem Bauteil mit zunehmender Anzahl der Nasen 22 schwieriger wird.

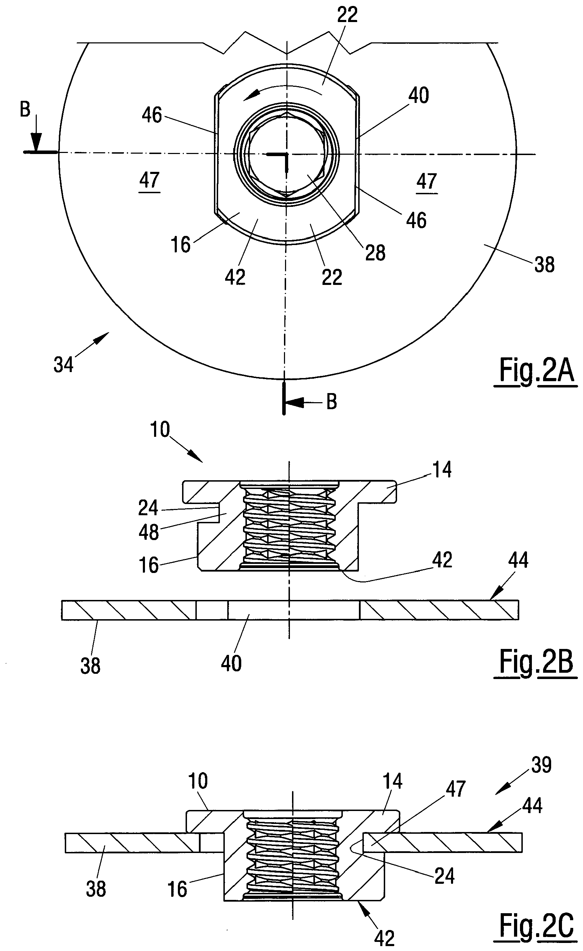

Im Bereich oberhalb der Nasen 22 sind in diesem Beispiel Klemmnuten 24 vorgesehen, die sich zwischen dem Flansch 14 und den Nasen 22 befinden und in etwa die gleiche Winkelerstreckung aufweisen wie die Nasen 22. Die Klemmnuten 24 sind zur klemmenden Aufnahme eines Bauteils bzw. eines Blechteils vorgesehen, wie später im Zusammenhang mit den Fig. 2A bis 2C näher erläutert wird.

Wie aus den Fig. 1A bis 1H ersichtlich, sind die Nasen 22 gerundet, und der Kernbereich 20 kann die Form eines Quaders 25 aufweisen, wie in Fig. 1A durch die entsprechend nummerierten Seiten angedeutet ist. Die genaue Formgebung des Kernbereichs 20 ist an sich unwichtig, sie dient nur für ein Konzept zur Feststellung, wo die Nasen 22 sich befinden. Somit könnten die in Fig. 1A senkrecht stehenden Seiten 25 des Kernbereichs 20 auch gerundet und sogar durch den Innenumfang der Klemmnuten 24 gebildet sein. In diesem Beispiel befinden sich die Nasen 22 an zwei sich einander gegenüberliegenden Seiten des Schaftteils 16 bzw. des Kernbereichs 20, das zwischen den Nasen 22 mit Abflachungen 26 versehen ist.

Alternativ könnte das Schaftteil 16 im Querschnitt in etwa als eine Ellipse mit zwei abgeflachten Seiten 26 an beiden Enden der kleineren Achse liegen, während die Nasen 22 an den Enden der größeren Achse liegen.

Ferner ist das Funktionselement 10 mit mindestens einem Formmerkmal 28 versehen, das für den Angriff eines Drehwerkzeugs ausgelegt ist.

In dieser Ausführung ist das Mutterelement 10 mit einem Funktionsabschnitt in der Form einer koaxial zur mittleren Längsachse 18 angeordneten Gewindebohrung 30 versehen, die in einer Durchgangspassage 32 in der Form eines Innensechskants ausgebildet ist. Der Innensechskant bildet das Formmerkmal 28, das für den Angriff eines Drehwerkzeugs ausgelegt ist, während die Gewindebohrung 30 zur Aufnahme eines Bolzenelements (nicht gezeigt) ausgelegt ist und vorzugsweise eine genormte Gewindeform aufweist.

In diesem Beispiel verlaufen die Klemmnuten 24 in radialer Richtung keilförmig, d.h. die radiale Tiefe jeder Klemmnut 24 nimmt in Umfangsrichtung gehend ab, jede Klemmnut weist eine radiale Keilform auf. Dies ist am besten aus den vergrößerten Darstellungen der Fig. 1G und 1H zu sehen. Man merkt in den Fig. 1G und 1H, dass die Abmessung am Eingang 34 jeder Klemmnut 24 größer ist als am Ende 36 der jeweiligen Klemmnut 24 im Uhrzeigersinn gehend betrachtet.

Die Art der Anbringung des Funktionselements 10 an einem Bauteil 38, um ein Zusammenbauteil 39 zu bilden, wird nun auch anhand der Fig. 2A bis 2C näher erläutert. Zunächst wird vorausgesetzt, dass das Bauteil 38 eine Vorlochung 40 entsprechend der Querschnittsform und -größe des Schaftteils16 am freien Stirnende 42 des Schaftteils 16 aufweist. Dies ermöglicht, dass das das Schaftteil 16 des Funktionselements 10 von oben kommend durch die Vorlochung 40 hindurchgeführt werden kann, bis der Flansch 14 gegen die Oberseite 44 des Bauteils 38 zu liegen kommt. Das Funktionselement 10 wird anschließend durch den Angriff eines geeigneten Drehwerkzeugs (nicht gezeigt) mit dem Formmerkmal 28 entgegen dem Uhrzeigersinn entsprechend dem Pfeil der Fig. 2A gedreht, so dass die Bereiche 47 des Bauteils 38 benachbart der flachen Seiten 46 der Vorlochung 40 in den Klemmnuten 24 zu liegen kommen und radial an den Böden 48 der Klemmnuten 24, vor allem an den Enden 38 der Klemmnuten 24, geklemmt sind, und das Funktionselement 10 aufgrund der Klemmkräfte verdrehsicher am Bauteil 38 befestigt ist. Mit anderen Worten ist das Funktionselement 10 mit einer Art Bajonettverbindung an dem Bauteil befestigt und kann als Bajonettelement betrachtet werden.

Das bisher beschriebene Formmerkmal 28 für den Angriff eines Drehwerkzeugs wird nunmehr genauer beschrieben.

Das Innengewinde der Gewindebohrung 30 weist, da es in die Innenumfangsseite der Durchgangspassage 32 mit sechskantförmigem Querschnitt geformt ist, unterschiedliche Tiefen entlang des Umfangs auf. Wie beispielsweise in den Figuren 1A, 1B, 1D, 1E, 1F, 1G, 1H und 2A, 2B und 2C ersichtlich ist, ist die Gewindetiefe der Gewindebohrung 30 in den Bereichen zwischen zwei benachbarten Ecken der Durchgangspassage 32 mit sechskantförmigem Querschnitt vollwertig und nimmt entlang des Umfangs der Durchgangspassage 32 in den Ecken ab. Obwohl die Gewindetiefe über die Länge der Gewindegänge nicht konstant ist, reicht sie dennoch aus, ein voll belastbares Gewinde zu bilden, zumal sie sich über eine ausreichende axiale Länge der Gewindebohrung 30 erstrecken. Selbst wenn der Innensechskant durch die Gewindebohrung 30 unterbrochen und daher keine durchgehenden flachen Seiten aufweist, ist dies nicht problematisch, da genügend Fleisch in den Eckbereichen vorhanden ist, um das erforderliche Drehmoment zum Drehen des Bajonettelements zu erzeugen. Bei einem Innensechskant wird das Drehmoment ohnehin nur unmittelbar benachbart zu den Eckbereichen übertragen. Ferner sorgt die axiale Länge des Innensechskants für eine ausreichende Angriffsfläche, wodurch die Flächenpressung unterhalb der zulässigen Grenze bleibt und eine Verformung der Gewindebohrung 30 nicht zu befürchten ist.

An dieser Stelle soll erwähnt werden, dass der Innensechskant nur ein Beispiel für ein Formmerkmal 28 zum Angriff eines Drehwerkzeugs darstellt. Im Allgemeinen kann die den Funktionsabschnitt bildende Gewindebohrung 30 in eine Durchgangspassage 32 mit rotationsunsymmetrischem Innenumfang ausgebildet sein. Beispiele für einen rotationsunsymmetrischen Innenumfang sind eine im Querschnitt polygonale Formgebung, insbesondere nach Art einer Torx-Aufnahme oder in Form eines regelmäßigen Polygons oder einer Vielzahnaufnahme, wobei der rotationsunsymmetrische Innenumfang das Formmerkmal 28 zur Aufnahme eines Drehwerkzeugs darstellt. Besonders günstig ist es, wenn der kleinste Innendurchmesser der Durchgangspassage 32 zumindest im Wesentlichen dem Kerndurchmesser einer genormten Schraube entspricht.

Ferner kann das Formmerkmal 28 für den Angriff eines Drehwerkzeugs anders realisiert werden, beispielsweise durch die Formgebung des Außenumfangs des Flansches 14. Dieser Außenumfang könnte sechseckig, mehreckig, polygonal, genutet oder anderweitig zur Aufnahme eines Drehwerkzeugs beliebiger Art ausgebildet werden.

Es soll darauf hingewiesen werden, dass der Flansch 14 des Funktionselements 10 in den Fig. 1A bis 1H kreisförmig dargestellt ist und einen größeren Durchmesser aufweist als der Durchmesser des Schaftteils im Bereich der Nasen 22. Sinn des Flansches 14 ist es einen Anschlag zu bilden, der beim Einsetzen des Funktionselements 10 in das Bauteil gegen die Oberseite 44 des Bauteils 38 gelangt, die Einsetztiefe begrenzt und verhindert, dass das Funktionselement durch das Formloch 40 hindurchfällt. Um die Anschlagfunktion zu erfüllen, ist ein kreisförmiger Flansch allerdings nicht notwendig, es ist lediglich erforderlich, dass der Flansch 14 eine radiale Ausdehnung in mindestens einer radialen Richtung aufweist, die größer ist als der Schaftteil 18 in dieser Richtung.

An sich ist ein Flansch aber auch unnötig, es würde zum Beispiel reichen, wenn das Funktionselement 10 die Querschnittsform und -größe des Schaftteils 16 aufweisen würde und die Klemmnuten 24 in dem Schaftteil 16 ausgebildet wären, sofern anderweitig sichergestellt wird, dass das Funktionselement 10 mit der erforderlichen Einsetztiefe in das gelochte Bauteil eingesetzt wird und nicht durch das Formloch 40 hindurchfällt . Diese Forderung könnte zum Beispiel durch die Auslegung eines Setzkopfes oder eines Werkzeugs erfolgen, der zum maschinellen Einsetzen der Funktionselemente in Bauteilen verwendet wird.

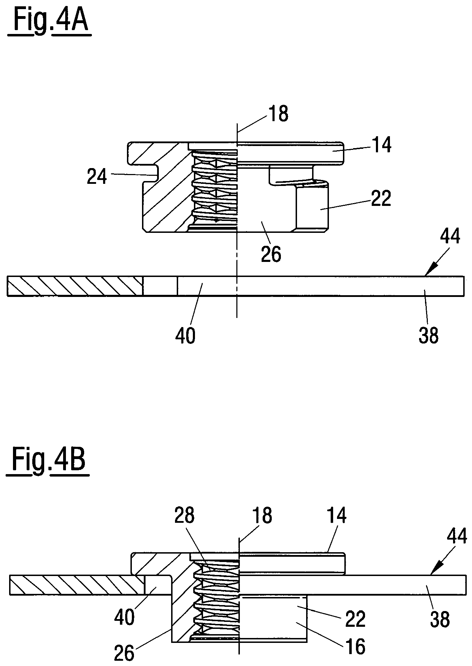

Eine zweite Ausführung eines erfindungsgemäßen Funktionselements 10 in der Form eines Mutterelements wird nunmehr anhand der Fig. 3A bis 3H und dessen Einsetzung in ein Bauteil 38 anhand der Fig. 4A und 4B beschrieben. In diesen Figuren werden die gleichen Bezugszeichen für Merkmale verwendet, die die gleiche Auslegung oder Funktion haben wie die entsprechend gekennzeichneten Merkmale der Ausführungen gemäß den Fig. 1A bis 1H und Fig. 2A bis 2C. Es versteht sich, dass die bisherige Beschreibung auch für diese Merkmale gilt, es sei denn etwas Gegenteiliges zum Ausdruck gebracht wird. Die bisherige Beschreibung wird daher nicht unnötig wiederholt. Dies, wie auch die Aussagen zu möglichen alternativen Auslegungen von Merkmalen der Ausführung der Fig. 1A bis 1H und Fig.2A bis 2C, gilt auch im entsprechenden Umfang für die weiteren Ausführungen gemäß den weiteren Figuren.

Der wesentliche Unterschied zwischen der bisherigen Ausführung gemäß den Fig. 1A bis 1H und Fig. 2A bis 2C und der Ausführung gemäß den Fig. 3A bis 3H und 4A und 4B besteht darin, dass bei der jetzigen Ausführung jede Klemmnut 24 in Umfangsrichtung keilförmig verläuft, d.h. jede Klemmnut in Umfangsrichtung in der axialen Tiefe sich verjüngend ausgebildet ist, wobei das Bauteil 38 in axialer Richtung anstatt in radialer Richtung geklemmt wird. In der Darstellung gemäß den Fig.3 und 4 wird das Mutterelement allerdings beim Einsetzen im vorgelochten Bauteil entgegen der Pfeilrichtung in Fig. 2A, d.h. im Uhrzeigersinn gedreht. Dies wäre auch bei der Ausführung gemäß den Fig. 1 und 2 möglich und sogar bevorzugt, da beim Einschrauben eines Bolzens mit normalem Rechtsgewinde das Mutterelement aufgrund der herrschenden Reibungskräften noch fester angezogen wird. Allerdings bestünde dann die Gefahr, dass bei der Entfernung des Bolzens, das Mutterelement sich im Bauteil lockern könnte.

Zu diesem Zweck haben die Böden 48 der Klemmnuten 24 einen konstanten radialen Abstand von der mittleren Längsachse 18 des Funktionselements, aber die untere Begrenzungsfläche 50 jeder Klemmnut 24 steigt entgegen dem Uhrzeigersinn progressiv in axialer Richtung 18 an, so dass die axiale Tiefe am Eingang 34 jeder Klemmnut 24 größer ist als an seinem Ende 36. Am Eingang 34 jeder Klemmnut 24 ist die axiale Tiefe der Klemmnut etwas größer als die Dicke des Bauteils 38 bzw. die Dicke des Bauteils 38 im Bereich der Vorlochung 40, während die axiale Tiefe am Ende 36 jeder Klemmnut 24 kleiner ist als die genannte Dicke. Beim Einsetzen des Funktionselements 10 in ein Bauteil entsprechend den Fig. 4A und 4B wird genauso vorgegangen wie im Zusammenhang mit den Fig. 2A bis 2C beschrieben, jedoch wird hier eine ausreichende axiale Klemmung anstatt einer radialen Klemmung erreicht.

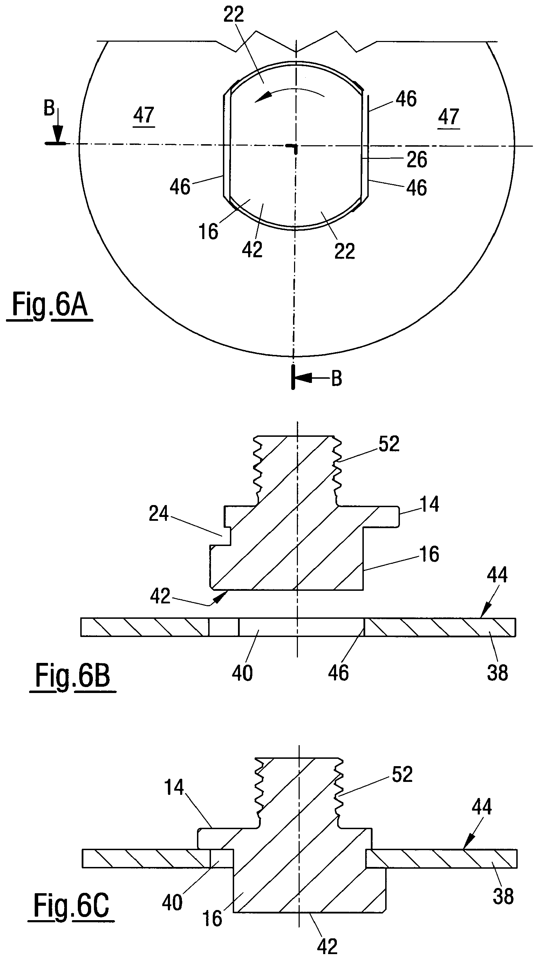

Während es sich bei den bisher beschriebenen Ausführungen der Funktionselemente 10 um Mutterelemente handelt, wird nun anhand der Fig. 5A bis 5H und 6A bis 6C eine erste Ausführungsform des Funktionselements in der Form eines Bolzenelements beschrieben. Auch hier kommt die radiale Klemmung entsprechend der Ausführung gemäß den Fig. 1A bis 1H und 2A bis 2C zum Einsatz.

Der wesentliche Unterschied zu den bisher beschriebenen Ausführungen besteht darin das das Funktionselement nicht mit einer Gewindebohrung sondern mit einem Gewindezylinder 52 mit Außengewinde 54 versehen ist und daher ein Bolzenelement darstellt. Das Bolzenelement hat ein Kopfteil 56, das ähnlich dem Körper 12 des Mutterelements gemäß den Fig. 1A bis 1H ausgebildet ist, mit der Ausnahme der fehlenden Gewindebohrung 30 mit Formmerkmal 28 für den Angriff eines Drehwerkzeugs und dem etwas anders ausgelegten Flansch 14.

Was die Auslegung des Flansches 14 anbetrifft, weicht dieser von einer Kreisform ab, indem zwei sich gegenüberliegenden Seiten mit Abflachungen 58 versehen sind, deren radialer Abstand etwas kleiner ist als der radiale Abstand der Nasen 22 des Schaftteils 16, wobei hier der Schaftteil 16 des Kopfteils 56 und nicht der Gewindezylinder 52 des Bolzenelements gemeint ist. Es ist allerdings nicht zwingend erforderlich, dass der radiale Abstand der abgeflachten Seiten des Flansches so ausgelegt ist wie soeben beschrieben. Ferner stehen die abgeflachten Seiten 58 des Kopfteils 56 senkrecht zu den abgeflachten Seiten 26 des Schaftteils 16, was auch nicht zwingend erforderlich ist. Die soeben beschriebenen abweichenden Auslegungen des Flansches 14 könnten auch für den Flansch 14 der Mutterelemente gemäß den Fig. 1A bis H und 3A bis 3H verwendet werden. Die Flachseiten 58 des Flansches 14 des Bolzenelements der Fig. 5A bis 5H dienen in diesem Beispiel für den Angriff eines Drehwerkzeugs, wie eines Gabelschlüssel (nicht gezeigt), um das Funktionselement 10 entsprechend dem Pfeil der Fig. 6A bis 6C beim Einsetzen in das Bauteil 36 zu drehen. In dieser Ausführungsform sind die Klemmnuten 24 wie in der Ausführungsform gemäß den Fig. 1A bis 1H für die radiale Klemmung des Bauteils ausgelegt.

Das Formmerkmal für den Angriff eines Drehwerkzeugs am Flansch des Funktionselements 10 könnte auch anders realisiert werden, und zwar mittels eines Außensechskants, eines Außenmehrkants, mehreren stirnseitigen, achsparallelen Bohrungen zur Aufnahme eines Zapfenschlüssels, oder mehreren sich in axialer Richtung erstreckenden Umfangsnuten für den Angriff eines C-Schlüssels, oder einer äußeren von einer Kreisform abweichenden Form zur Aufnahme eines Schlüssels mit einer komplementären Formgebung.

Denkbar wäre es auch, am freien Ende des Gewindezylinders 52 oder an einem dort vorgesehenen Zapfen 62, ein Formmerkmal für den Angriff eines Drehwerkzeugs vorzusehen. Das entsprechende Formmerkmal für den Angriff eines Drehwerkzeugs könnte zum Beispiel aus der Gruppe bestehend aus einem Innensechskant, einem Innenmehrkant, einer Torx-Aufnahme, einem Außensechskant, oder einem Außenmehrkant ausgewählt werden.

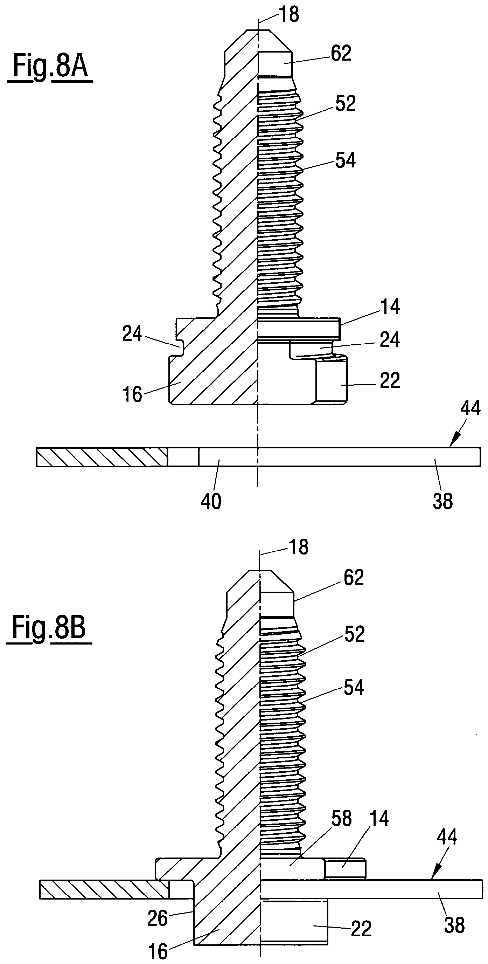

Eine zweite Ausführungsform eines Funktionselements 10 in der Form eines Bolzenelements wird nunmehr anhand der Fig. 7A bis 7H und 8A und 8B beschrieben werden. Diese Ausführung unterscheidet sich von der der Fig. 5A bis 5H und 6A bis 6C nur darin, dass hier die axiale Klemmung gemäß der Ausführung der Fig. 3A bis 3H und 4A und 4B zur Anwendung kommt. Das heißt, dass auch hier die Böden der Klemmnuten 24 einen konstanten radialen Abstand von der mittleren Längsachse 18 des Funktionselements aufweisen, aber die untere Begrenzungsfläche 50 jeder Klemmnut 24 entgegen dem Uhrzeigersinn progressiv in axialer Richtung ansteigt, so dass die axiale Tiefe am Eingang 34 jeder Klemmnut größer ist als an ihrem Ende 36. Auch hier ist am Eingang 34 jeder Klemmnut 24 die axiale Tiefe der Klemmnut 24 etwas größer als die Dicke des Bauteils 38, bzw. die Dicke des Bauteils im Bereich der Vorlochung 40, während die axiale Tiefe am Ende 36 jeder Klemmnut 24 kleiner ist als die genannte Dicke.

Bei allen beschriebenen Ausführungsformen des erfindungsgemäßen Funktionselements entsteht beim Einsetzen desselben in ein Bauteil 38, das ein Formloch 40 mit einer Querschnittsform aufweist, das zumindest im Wesentlichen der Querschnittsform und -größe des Schaftteils 16 entspricht, ein Zusammenbauteil bei dem das Funktionselement 10 gegenüber dem Bauteil 38 so verdreht ist, dass Bereiche 60 des Bauteils 38, die sich bei der Durchführung des Schaftteils 16 durch das Formloch 40 hindurch zwischen den Nasen 22 des Schaftteils 16 befanden, sich nunmehr in den Klemmnuten 24 befinden und dort verkeilt sind.

Das erfindungsgemäße Verfahren zur Herstellung des Zusammenbauteils 39 kann wie folgt zusammengefasst werden: Zunächst wird ein Formloch 40 im Bauteil 38 mit einer Querschnittsform ausgebildet, die zumindest im Wesentlichen der Querschnittsform und -größe des Schaftteils entspricht. Dann wird das Schaftteil 16 durch das Formloch 40 hindurch geführt bis der Rand des Formloches 40 sich in etwa in der axialen Höhe der Klemmnuten 24 befindet, und anschließend wird das Funktionselement 10 um seine mittlere Längsachse 18 gedreht, bis die Randbereiche 47 des Formloches 40, die sich zwischen den Nasen 22 befinden, in die Klemmnuten 24 eingeklemmt sind.

Ferner kann das freie Stirnende 42 des Schaftteils zur Herstellung des Formlochs 40 als Stanzwerkzeug verwendet werden. Dabei wird das Bauteil 38 auf einer Matrize (nicht gezeigt) abgestützt, die eine Öffnung aufweist, die eine Querschnittsform und -größe aufweist, die der des Schaftteils 16 entspricht, wobei die Orientierung der Öffnung der Matrize der Orientierung des Schaftteils 16 um die mittlere Längsachse 18 des Funktionselements 10 entsprechen muss. In der Darstellung gemäß den Fig.7 und 8 wird das Bolzenelement allerdings beim Einsetzen im vorgelochten Bauteil entgegen der Pfeilrichtung in Fig. 6A, d.h. im Uhrzeigersinn gedreht. Dies wäre auch bei der Ausführung gemäß den Fig. 5 und 6 möglich und sogar bevorzugt, da bei der Anbringung einer Mutter mit normalem Rechtsgewinde das Bolzenelement aufgrund der herrschenden Reibungskräften noch fester angezogen wird. Allerdings bestünde dann die Gefahr, dass bei der Entfernung der Mutter, das Bolzenelement sich im Bauteil lockern könnte.

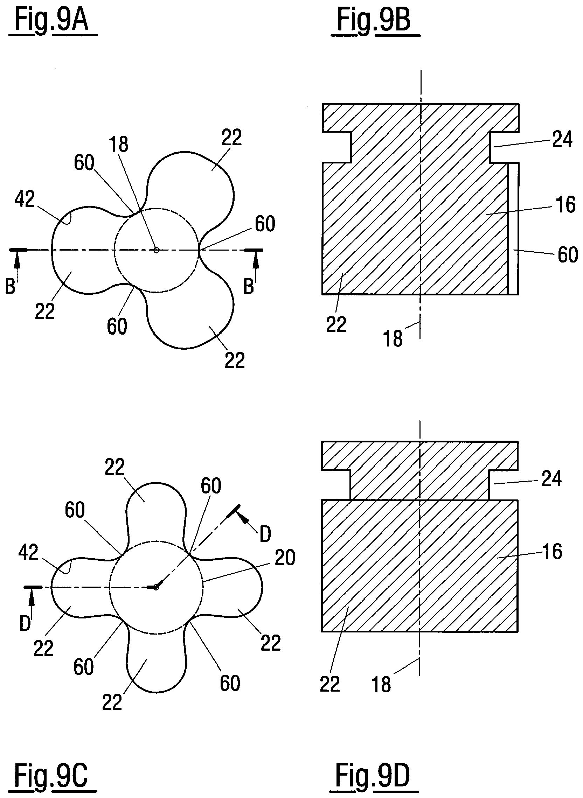

Die Fig. 9A und 9B zeigen eine Ausführungsform des Funktionselements 10, bei dem der Schaftteil 16 im Querschnitt in etwa die Form eines dreiblättrigen Kleeblatts mit drei vom hier kreisförmigen gedachten Kernbereich 20 abstehenden Blättern bzw. Nasen 22 und zwischen je zwei benachbarten Nasen jeweils eine gerundete Vertiefung 60 aufweist. In diesem Beispiel sind die Klemmnuten für einen radiale Klemmung entsprechend den Fig. 1 und 2 ausgelegt, wobei die Klemmnuten im Schaftteil 16 ausgebildet sind keinen Flansch vorgesehen ist. Es wäre allerdings durchaus möglich bei dieser Ausführungsform einen Flansch 14 z-B gemäß einer der bisher beschriebenen Ausführungen vorzusehen, was auch für die Ausführung gemäß den Fig. 9C und 9D gilt.

Die Fig. 9C und 9D zeigen eine Ausführungsform des Funktionselements ähnlich der der Fig. 9A und 9B, bei dem jedoch der Schaftteil 18 im Querschnitt die Form eines vierblättrigen Kleeblatts mit vier vom hier kreisförmigen gedachten Kernbereich 20 abstehenden Nasen 22 und zwischen je zwei benachbarten Nasen 22 jeweils eine gerundete Vertiefung 60 aufweist.

### Bezugszeichenliste

- 10: Element, Funktionselement
- 12: Körper des Funktionselements
- 14: Flansch
- 16: Schaftteil
- 18: mittlere Längsachse des Elements bzw. des Schaftteils
- 20: Kernbereich des Schaftteils
- 22: Nasen
- 24: Klemmnuten
- 25: Quader, Seiten des Kernbereichs
- 26: Abflachungen des Schaftteils
- 28: Formmerkmal
- 30: Gewindebohrung
- 32: Durchgangspassage
- 34: Eingang einer Klemmnut
- 36: Ende einer Klemmnut
- 38: Bauteil
- 39: Zusammenbauteil
- 40: Formloch, Vorlochung des Bauteils 38
- 42: freies Stirnende des Schaftteils 16
- 44: Oberseite des Bauteils 38
- 46: flache Seiten der Vorlochung 40
- 47: Bereiche des Bauteils neben der flachen Seiten der Vorlochung 40
- 48: Boden jeder Klemmnut 24
- 50: untere Begrenzungsfläche jeder Klemmnut 24
- 52: Gewindezylinder
- 54: Außengewinde
- 56: Kopfteil des Bodenelements
- 58: Abflachungen des Flansches 14, abgeflachte Seiten des Flansches
- 60: gerundete Vertiefung zwischen je zwei Nasen
- 62: Zapfen

## Patentansprüche

1. Funktionselement (10) mit einem Schaftteil (16) mit einer mittleren Längsachse (18),
**dadurch gekennzeichnet,**
**dass** der Schaftteil (16) mehrere sich in Längsrichtung erstreckende und radial abstehende Nasen (22) aufweist,
**dass** mindestens im Bereich der Winkelerstreckung der Nasen (22) sich zumindest im Wesentlichen in radialer Richtung erstreckende Klemmnuten (24) zur klemmenden Aufnahme eines Bauteils (38) bzw. eines Blechteils vorgesehen sind, und
**dass** das Funktionselement (10) mit mindestens einem Formmerkmal (28) versehen ist, das für den Angriff eines Drehwerkzeugs ausgelegt ist.

2. Funktionselement (10) nach Anspruch 1,
**dadurch gekennzeichnet,**
**dass** die radiale Tiefe jeder Klemmnut (24) in Umfangsrichtung gehend abnimmt, d.h. jede Klemmnut (24) eine radiale Keilform aufweist.

3. Funktionselement (10) nach Anspruch 1,
**dadurch gekennzeichnet,**
**dass** jede Klemmnut (24) in Umfangsrichtung keilförmig verläuft, d.h. jede Klemmnut (24) in Umfangsrichtung sich in der axialen Tiefe verjüngend ausgebildet ist.

4. Funktionselement (10) nach einem der vorhergehenden Ansprüche,
**dadurch gekennzeichnet,**
**dass** die Nasen (22) gerundet sind.

5. Funktionselement (10) nach einem der vorhergehenden Ansprüche,
**dadurch gekennzeichnet,**
**dass** das Schaftteil (16) im Querschnitt einen Kernbereich (20) aufweist, von dem vorzugsweise mindestens zwei sich in Längsrichtung erstreckende Nasen (22) radial abstehen, wobei bei zwei vorhandenen Nasen (22) diese an zwei sich einander gegenüberliegenden Seiten des Kernbereichs (20) vorgesehen sind oder der Schaftteil (16) sich im Querschnitt als Ellipse darstellt, wobei die Nasen (22) den Hauptdurchmesser der Ellipse bilden.

6. Funktionselement (10) nach einem der vorhergehenden Ansprüche,
**dadurch gekennzeichnet,**
**dass** der Schaftteil (16) im Querschnitt in etwa die Form eines dreiblättrigen Kleeblatts mit drei vom Kernbereich (20) abstehenden Blättern bzw. Nasen (22) und zwischen je zwei benachbarten Nasen (22) jeweils eine gerundete Vertiefung (60) aufweist.

7. Funktionselement (10) nach einem der vorhergehenden Ansprüche 1 bis 5,
**dadurch gekennzeichnet,**
**dass** der Schaftteil (16) im Querschnitt die Form eines vierblättrigen Kleeblatts mit vier vom Kernbereich (20) abstehenden Nasen (22) und zwischen je zwei benachbarten Nasen (22) jeweils eine gerundete Vertiefung (60) aufweist.

8. Funktionselement (10) nach zumindest einem der vorstehenden Ansprüche,
**dadurch gekennzeichnet,**
**dass** es benachbart zu den Klemmnuten (24) einen Flansch (14) aufweist, dessen radiale Ausdehnung vorzugsweise in mindestens einer radialen Richtung größer ist als der des Schaftteils (16) in dieser Richtung.

9. Funktionselement (10) nach Anspruch 8,
**dadurch gekennzeichnet,**
**dass** der Flansch (14) in Draufsicht kreisrund ist.

10. Funktionselement (10) nach zumindest einem der vorstehenden Ansprüche,
**dadurch gekennzeichnet,**
**dass** es eine mittlere Gewindebohrung (30) aufweist und daher ein Mutterelement darstellt.

11. Funktionselement (10) nach zumindest einem der vorstehenden Ansprüche 1 bis 9,
**dadurch gekennzeichnet,**
**dass** es auf einer seiner Stirnseiten, vorzugsweise auf der den Klemmnuten (24) benachbarten Stirnseite, einen vorstehenden Gewindezylinder (52) aufweist und daher ein Bolzenelement darstellt.

12. Funktionselement (10) nach zumindest einem der vorstehenden Ansprüche,
**dadurch gekennzeichnet,**
**dass** das Formmerkmal (28) für den Angriff eines Drehwerkzeugs aus der Gruppe bestehend aus einem Innensechskant, einem Innenmehrkant, einer Torx-Aufnahme, einem Außensechskant, einem Außenmehrkant, mehreren stirnseitigen, achsparallelen Bohrungen zur Aufnahme eines Zapfenschlüssels, sich in axialer Richtung erstreckende Umfangsnuten für den Angriff eines C-Schlüssels, und einer äußeren von einer Kreisform abweichenden Form zur Aufnahme eines Schlüssels mit einer komplementären Formgebung ausgewählt ist, wobei im Falle eines Innensechskants oder eines Innenmehrkants oder einer Torx-Aufnahme eine mittlere Gewindebohrung (30) in der entsprechenden Aufnahme (32) vorgesehen sein kann, die vorzugsweise zur Aufnahme eines genormten Bolzens bemessen ist.

13. Zusammenbauteil (39) bestehend aus einem Funktionselement (10) nach zumindest einem der vorstehenden Ansprüche und einem Bauteil (38),
**dadurch gekennzeichnet,**
**dass** das Bauteil (38) ein Formloch (40) mit einer Querschnittsform aufweist, das zumindest im Wesentlichen der Querschnittsform und -größe des Schaftteils (16) entspricht, wobei das Funktionselement (10) gegenüber dem Bauteil (38) so verdreht ist, dass Bereiche (47) des Bauteils (38), die bei der Durchführung des Schaftteils (18) durch das Formloch hindurch sich zwischen den Nasen (22) des Schaftteils (16) befanden, sich nunmehr in den Klemmnuten (24) des Schaftteils befinden und dort verkeilt sind.

14. Verfahren zur Herstellung eines Zusammenbauteils (39) nach Anspruch 13,
**dadurch gekennzeichnet,**
**dass** ein Formloch (40) im Bauteil (38) mit einer Querschnittsform ausgebildet wird, die zumindest im Wesentlichen der Querschnittsform und -größe des Schaftteils (18) entspricht,
**dass** das Schaftteil (16) durch das Formloch (40) hindurch geführt wird bis der Randbereich des Formloches (40) sich in etwa in der axialen Höhe der Klemmnuten (24) befindet, und
**dass** das Funktionselement (10) um seine mittlere Längsachse (18) gedreht wird, bis die Randbereiche (47) des Formloches (40), die sich zwischen den Nasen (22) befinden, in den Klemmnuten (24) eingeklemmt sind.

15. Verfahren zur Herstellung eines Zusammenbauteils (39) nach Anspruch 14,
**dadurch gekennzeichnet,**
**dass** das freie Stirnende (42) des Schaftteils (16) zur Herstellung des Formlochs (40) als Stanzwerkzeug verwendet wird.
